# EUROPÄISCHE PATENTSCHRIFT

(11) **EP 1 926 572 B1**
(45) Veröffentlichungstag und Bekanntmachung des Hinweises auf die Patenterteilung: **22.03.2017**
(21) Anmeldenummer: 06792171.8
(22) Anmeldetag: 20.09.2006
(51) Int. Cl.: B25J 5/00, B23P 21/00, B23P 19/00, B62D 65/02, B25J 9/00, B62D 65/18

(54) **BEARBEITUNGSANLAGE**
PROCESSING PLANT
INSTALLATION D'USINAGE

(30) Priorität: 23.09.2005 DE 202005015118 U
(43) Veröffentlichungstag der Anmeldung: 04.06.2008
(73) Patentinhaber: KUKA Systems GmbH, 86165 Augsburg (DE)
(72) Erfinder: STURM, Thomas, 85259 Wiedenzhausen (DE)
(74) Vertreter: Ernicke, Klaus Stefan
(86) Internationale Anmeldenummer: PCT/EP2006/009130
(87) Internationale Veröffentlichungsnummer: WO 2007/036317

(56) Entgegenhaltungen:
- EP-A- 0 532 372
- EP-A- 1 380 392
- WO-A-2004/080645
- DE-A1- 3 425 734
- DE-A1- 3 614 165
- DE-A1- 3 808 594
- DE-A1- 4 234 674
- DE-C1- 3 519 580
- DE-U1- 29 813 669
- US-A- 4 932 541
- US-A- 5 570 990
- US-A1- 4 698 775
- US-A1- 4 764 078

## Beschreibung

Die Erfindung betrifft eine Bearbeitungsanlage mit den Merkmalen im Oberbegriff des Hauptanspruchs.

Eine solche Bearbeitungsanlage ist aus der Praxis bekannt. Sie beinhaltet ein oder mehrere Bearbeitungsstationen, die von einer Schutzabtrennung, z.B. einem Zaun, umgeben sind, der Personen aus Sicherheitsgründen den freien Zutritt zum Arbeitsbereich innerhalb der Bearbeitungsstation verwehrt. Für den Personenzutritt sind ein oder mehrere spezielle Zugänge mit besonderen Sicherungseinrichtungen vorhanden, welche im Zutrittsfall die in der Bearbeitungsstation angeordneten Bearbeitungsgeräte, insbesondere Bearbeitungsroboter, abschalten. In der oder den Bearbeitungsstationen werden mehrere Bauteile untereinander oder ggf. auch mit einem von außen zugeführten Werkstück gefügt. Die Bauteile werden in ein oder mehreren Bauteilmagazinen außenseitig an der Schutzabtrennung bereit gestellt, wo sie von Werkern manuell kommissioniert und an stationäre Zuführeinrichtungen übergeben werden, welche die Bauteile durch die Schutzabtrennung hindurch in den Innenraum der Bearbeitungsstation transportieren und dort zur Aufnahme und Bearbeitung für die Bearbeitungsgeräte, insbesondere Roboter, bereit stellen. Diese konventionelle Bauteillogistik bedingt einen hohen Aufwand hinsichtlich Personaleinsatz, Geräte- und Schutztechnik. Zudem besteht ein großer Platzbedarf an den Außenseiten der Bearbeitungsstationen. Ungünstig ist außerdem der Umstand, dass die Zuführeinrichtungen und die Bauteilmagazine ergonomisch günstig ausgebildet sein sollen. Dies führt in der Praxis in manchen Fällen zu ungünstigen Abnahmepositionen für die Roboter innerhalb der Bearbeitungsstation. Die Zuführeinrichtungen wirken sich ferner störend auf die Zugänglichkeit der Bearbeitungsstationen aus.

Die DE 298 13 669 U1 zeigt einen ähnlichen Stand der Technik mit einer Bearbeitungsstation, der die Bauteile durch eine zaunförmig Schutzabtrennung mittels einer darin integrierten Zuführeinrichtung in Form eines Drehtischs zugeführt werden. Die Bauteile werden dabei von einem Werker manuell auf den Drehtisch geladen.

Aus der US 4,764,078 A ist ein Regallagersystem für Produktionsmaterialien oder Verpackungsmaterialien bekannt, bei dem Transportfahrzeuge mit einem Roboter die Materialien von einem Regallager zu einem Herstellungsbereich und zurück transportieren. Sie bewegen sich dabei stets innerhalb eines Zauns, der das gesamte Regallagersystem außenseitig umgibt und fahren in einem Korridor in den Herstellungsbereich hinein und zurück.

Die WO 2004/080645 A1 lehrt eine Bearbeitungsanlage mit mehreren verketteten Bearbeitungsstationen, wobei stationäre oder fahrbare Roboter die Karosseriebauteile an die jeweils nächste Station direkt übergeben.

Die EP 0 532 372 A1 befasst sich mit einer Montageanlage mit mehreren Bauteillagern, an denen mehrere im Kreis bewegte Montagewagen mit aufgesetzten Robotern vorbeifahren, Bauteile entnehmen und an einem auf dem Wagen befindlichen Werkstückhalter assemblieren und fügen. Die Wagen mit dem Roboter bilden dabei Bearbeitungsstationen, die keine Schutzabtrennung aufweisen.

Bei der in der EP 1 380 392 A1 offenbarten Blechbiegeanlage transportiert ein Wagen mit einem Roboter und einem Bauteilträger Bleche von Lagerstellen zu einer Biegemaschine und zurück. Der Roboter entnimmt die Bleche mit einem Greifer einzeln aus dem mitgeführten Bauteilträger und legt sie in die Biegemaschine. Die Biegemaschine ist nicht von einer Schutzabtrennung umgeben.

Für die DE 36 14 165 A1 gilt das Gleiche wie für den vorgenannten Stand der Technik. Ein Wagen mit einem Gelenkarmroboter transportiert Werkstücke zu Werkzeug- oder Montagemaschinen sowie zu Bereitstellungsplätzen und Ablagen. Die Werkzeug- oder Montagemaschinen sind nicht mit einer Schutzabtrennung umgeben.

Die US 4,698,775 A befasst sich mit einer Anlage zur Waferherstellung, in der Wafer von einem Wagen mit einem Roboter zu verschiedenen frei zugänglichen Fabrikationsmaschinen transportiert werden. Es fehlt auch hier an einer die Fabrikationsmaschinen umgebenden Schutzabtrennung.

In der US 4,932,541 A ist ein Schiffsladesystem angesprochen, bei dem Container auf See zwischen Schiffen mit einem Kran umgeladen werden, um dann vom kleineren Schiff an Land transportiert zu werden.

Die DE 38 08 594 A1 offenbart ein Hochregallager oder Verschieberegallager mit einem Schienensystem für ein Transportfahrzeug mit einem Roboter.

Die US 5,302,061 A betrifft eine Werkzeugmaschine mit einem Roboter zum Öffnen und Schließen einer Türe im Maschinengehäuse. Der Roboter ist innerhalb des Maschinengehäuses angeordnet und greift extern auf einem Tisch bereit gestellte Bauteile und führt sie in die Maschine zu.

Aus der US 5,570,990 A ist ein manuell geführter Wagen mit einem Manipulator bekannt, der Werkstücke von einer Hängebahn abnimmt und an eine Bearbeitungsmaschine übergibt.

Die DE 35 19 580 C1 betrifft eine Anlage zum Herstellen und Verpacken von Zigaretten, in der eine Hängebahn mit einem Roboterarm verschiedene Zigarettenmaschinen verknüpft und innerhalb der Anlage angeordnet ist. Der Roboter kann nach außen zu einer Bereitstellung greifen und dortige Spulen aufnehmen.

Die DE 34 25 734 A1 offenbart eine automatisierte Anlage zur Zufuhr von Packmaterial an Fertigungs- und Verpackungsstraßen mit einem Transportfahrzeug und einem Roboter.

Es ist Aufgabe der vorliegenden Erfindung, die Bauteillogistik zu verbessern.

Die Erfindung löst diese Aufgabe mit den Merkmalen im Hauptanspruch.
Die erfindungsgemäße Ausgestaltung der Zuführeinrichtung und der Bauteillogistik hat den Vorteil einer wesentlichen Verringerung des Bau- und Arbeitsaufwandes.

Die Verteilfahrzeuge mit ihren Manipulatoren können zumindest einen Teil, vorzugsweise alle bisher üblichen stationären Bauteilzuführungen an der oder den Bearbeitungsstationen ersetzen. Die Stationsbreite wird erheblich reduziert. Hierdurch sinkt der Platzbedarf der gesamten Bearbeitungsanlage. Die Außenkontur der Bearbeitungsstation und der Schutzabtrennung kann weitgehend geradlinig verlaufen. Insgesamt sind das Anlagen- und Stationskonzept sowie das Logistikkonzept wesentlich kostengünstiger und flexibler als bisherige Systeme. Die manuellen Handling- und Kommissionierungstätigkeiten können durch die beanspruchte Bauteillogistik von der Bearbeitungsstation zumindest großteils weg und zu einer Bereitstellung für die Bauteile, insbesondere einem Bauteilcenter verlagert werden. Insgesamt können hierdurch die manuellen Handhabungsvorgänge und das hierfür erforderliche Personal verringert werden.

Ein weiterer großer Vorteil ist die Verringerung des Sicherheitsaufwands zum Personenschutz an der Bearbeitungsstation. Die bisherigen manuellen Handling- und Zuführaufgaben werden von dem Verteilfahrzeug und dem Manipulator übernommen. Sie besitzen eine Einrichtung zum Überwinden der Schutzabtrennung, die den bisherigen Bau- und Sicherungsaufwand an den stationären Zuführeinrichtungen ersetzt. Im einen Fall kann der Manipulator bei entsprechender Anordnung und Ausgestaltung seine Handlingvorgänge über die Schutzabtrennung hinweg ausführen. In der anderen Variante können das Verteilfahrzeug und/oder der Manipulator eine Öffnungsvorrichtung besitzen, um einen Maschinenzugang in der Schutzabtrennung zu öffnen und zu schließen. Unbefugte Personen können diesen Zugang nicht öffnen. Die Schutzabtrennung kann dadurch ihre Personenschutzfunktion behalten, wobei sie andererseits wesentlich vereinfacht werden kann. Bei dieser maschinellen Bauteillogistik ist der Personenschutz ebenfalls gewährleistet. Einerseits kann das Verteilfahrzeug eine vorzugsweise umlaufende Schutzabschirmung besitzen, die Personen den Zugang zu den innenliegenden Fahrzeugbereichen verwehrt. Der Manipulator kann zu Handhabungszwecken und zum Be- und Entladen über diese eigene Schutzabschirmung ebenfalls hinweggreifen. Der Arbeitsbereich des Manipulators kann dabei ebenfalls durch eine ggf. steuerbare Verriegelung zum Personenschutz abgesichert werden, so dass die Manipulatorbewegungen und der Arbeitsbereich auf Gebiete beschränkt sind, zu denen Personen keinen Zutritt haben. Mit dem umseitig abgeschirmten Verteilfahrzeug können auch Maschinenzugänge an der Schutzabtrennung während des Handlingbetriebs abgedeckt und gegen Personenzutritt abgeschirmt werden. Ähnliche Sicherungsmaßnahmen können auch an der Bereitstellung der Bauteile, insbesondere an einem Bauteilcenter getroffen werden.

Die maschinelle Bauteillogistik ermöglicht eine Zuführung und eine Handhabung der Bauteile in Bauteilträgern, die ein oder mehrere Bauteile gleicher oder unterschiedlicher Art aufnehmen können. Dies vereinfacht und verringert den Handlingaufwand und auch den Kommissionieraufwand für die Beladung der Bauteilträger. Diese Beladung kann im vorerwähnten Sinne außerhalb der Bearbeitungsstation an einer vorzugsweise zentralen Stelle in einem Bauteilcenter geschehen. Das beim Stand der Technik erforderliche mehrmalige Umladen kann entfallen. Im Extremfall kann eine Kommissionierung bereits bei den Herstellern der Bauteile erfolgen, so dass an der Bereitstellung bereits vorkommissionierte Bauteile vorliegen und der manuelle Kommissionierungs- und Beladeaufwand noch weiter reduziert werden kann oder sogar entfallen kann. Die Bauteillogistik kann teil- oder vollautomatisch ablaufen. Durch eine Normierung von Bauteilträgern ist es zudem möglich, den Handling- und Bereitstellungsaufwand in der gesamten Bearbeitungsanlage zu verringern, wobei auch ein Wechsel in der Art und Anzahl der Bauteile ohne weiteres möglich ist.

Der Manipulator auf dem Verteilfahrzeug kann außer dem Handling von Bauteilen oder Bauteilträgern noch weitere Aufgaben haben. Er kann z.B. Fügeaufgaben während des Bauteiltransports wahrnehmen und z.B. verschiedene Bauteile zu einer Gruppe assemblieren und ggf. fügen. Hierbei kann der Manipulator auch Bearbeitungsvorgänge, wie z.B. Schweißen, Kleben, Schrauben, Beschichten oder dergl. mit entsprechenden Werkzeugen durchführen. Der Manipulator kann zudem an der Andockstelle an der Bearbeitungsstation auch für Handling- und Fügeaufgaben innerhalb der Bearbeitungsstation und in den dort ablaufenden Prozessen verwendet werden.

Die ergonomiebedingten Einschränkungen in der Bauteilzuführung werden wesentlich verringert. Ergonomiebedingungen brauchen im Wesentlichen nur noch an der Bereitstellung der Bauteile, insbesondere an einem Bauteilcenter, berücksichtigt zu werden. Innerhalb der Bearbeitungsstation können die Bauteile in einer für die dortigen Bearbeitungsgeräte, insbesondere Roboter, optimalen Positionen bereit gestellt werden. Bei nachträglichen Verschiebungen der Arbeitsinhalte einzelner Stationen sind die Auswirkungen bzw. Einschränkungen in Bezug auf die Bauteilzuführung wesentlich geringer als beim Stand der Technik. Im Bedarfsfall brauchen z.T. nur neue Haltestellen für die Verteilfahrzeuge eingeführt zu werden. An der Bearbeitungsstation selbst sind keine Werker mehr zwingend erforderlich, auch wenn diese zu Kontrollzwecken oder für bestimmte Handlingaufgaben noch vorhanden sein können.

Günstig ist ferner die Verbesserung der Zugänglichkeit der Bearbeitungsstationen und der gesamten Bearbeitungsanlage. Die Flexibilität der Bearbeitungsstationen und der Bearbeitungsanlage wird erhöht. Bauteile können an beliebigen Stellen eingebracht werden. Günstig ist auch die mehrfache Verwendungsmöglichkeit der Verteilfahrzeuge, die mehrere Bearbeitungsstationen oder auch mehrere Bearbeitungsanlagen bedienen können. Bereits bestehende Bearbeitungsstationen oder Bearbeitungsanlagen können mit der beanspruchten Bauteillogistik nachgerüstet oder umgerüstet werden. Die Logistik ist außerdem anpassungsfähig und weiterverwendbar, wenn die Bauteile oder Werkstücke sich ändern sollten.

Von Vorteil ist ferner, dass auch Bearbeitungsanlagen mit relativ niedrigen Stückzahlen durch die beanspruchte Logistik wirtschaftlich mit Bauteilen beschickt werden können. In der produktionsfreien Zeit kann das Verteilfahrzeug zu Wartungs-, Reinigungs- und Inspektionsarbeiten eingesetzt werden. Es ist somit multifunktional verwendbar. Hierbei kann das Verteilfahrzeug bzw. der darauf befindliche Manipulator einen Werkzeugwechsel durchführen und für diese Dienstleistungen geeignete Werkzeuge, wie Sprühpistolen, Fettpressen, Industriestaubsauger etc. aufnehmen. Das Verteilfahrzeug und/oder der Manipulator können ein optisches Überwachungssystem zur Steuerung und Kontrolle der Handlingvorgänge und auch der vorgenannten Dienstleistungen aufweisen, welches z.B. als Visionssystem ausgebildet sein kann.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Schemadarstellung einer Bearbeitungsanlage mit mehreren Bearbeitungsstationen einer Bereitstellung mit einem Bauteilcenter und einer Bauteilzuführeinrichtung mit mehreren Verteilfahrzeugen,
- Figur 2:: eine vergrößerte Draufsicht auf eine Bearbeitungsstation mit einem angedockten Verteilfahrzeug,
- Figur 3-5:: ein Verteilfahrzeug in Seitenansicht, geklappter Draufsicht und Heckansicht,

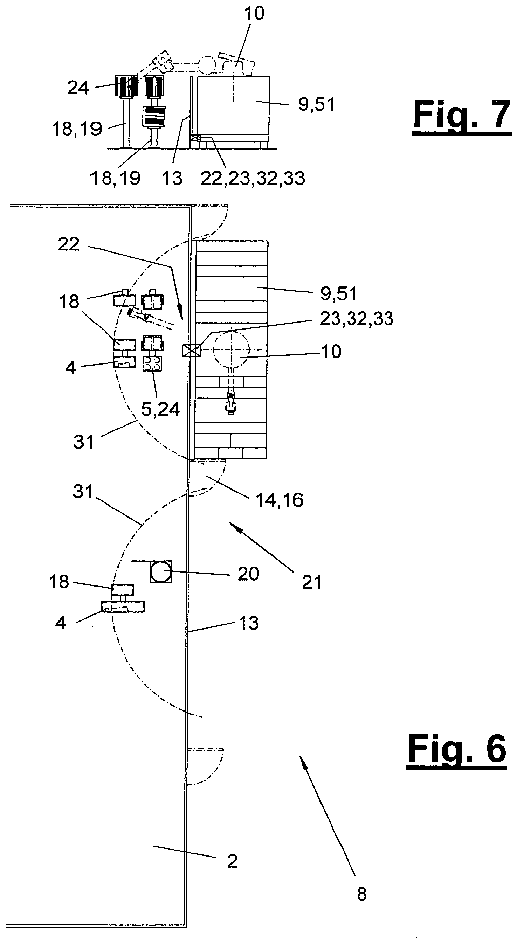

- Figur 6-7:: ein Verteilfahrzeug in Andockstellung an eine abgebrochen dargestellte Bearbeitungsstation in Draufsicht und geklappter Frontansicht,
- Figur 8-9:: ausschnittsweise Darstellungen eines Verteilfahrzeuges in einem Bauteilcenter in Draufsicht und geklappter Frontansicht und
- Figur 10-11:: eine Variante eines Verteilfahrzeugs in Andockstellung an einer mit Nischen versehenen Bearbeitungsanlage in Draufsicht und geklappter Frontansicht sowie eine Alternativdarstellung eines Verteilsfahrzeugs.

Die Erfindung betrifft eine Bauteillogistik für eine Bearbeitungsanlage (1) mit der zugehörigen Vorrichtungs- und Verfahrenstechnik.

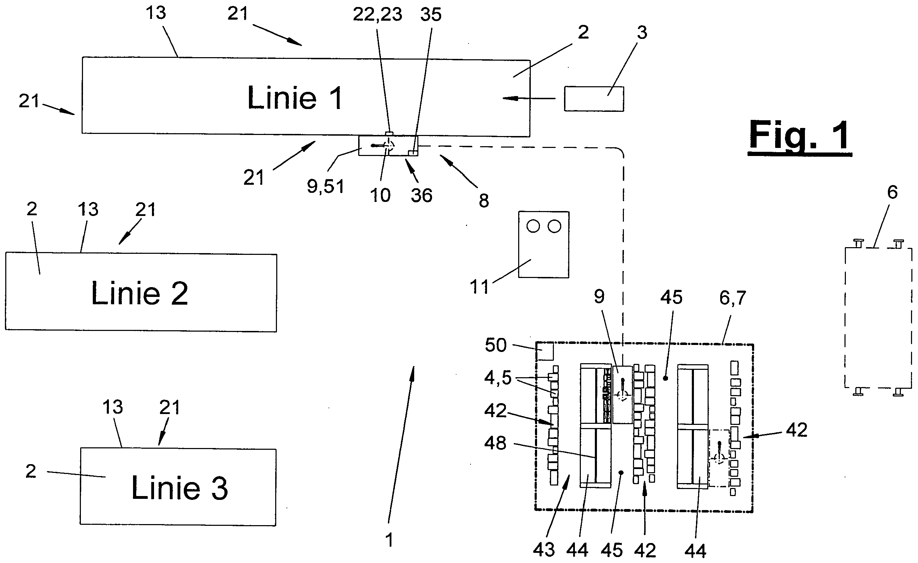

Figur 1 zeigt in einer schematischen Draufsicht eine Bearbeitungsanlage (1), die ein oder mehrere Bearbeitungsstationen (2) aufweist, die hier als Linie 1, 2 und 3 bezeichnet sind. Die Bearbeitungsanlage (1) weist ferner mindestens eine Bereitstellung (6) für Bauteile (4,5) auf, die z.B. als ein Bauteilcenter (7) ausgebildet ist. Alternativ oder zusätzlich kann eine andere Bereitstellung (6) vorhanden sein, die z.B. ein gestrichelt angedeutetes Transportfahrzeug, insbesondere ein Eisenbahnwagon, ein LKW oder dergl. sein kann, in dem Bauteile (4,5) vorkommissioniert in die Bearbeitungsanlage (1) gebracht bzw. hier bereit gestellt werden. Die Bereitstellung (6) befindet sich außerhalb und ggf. räumlich getrennt von den Bearbeitungsstationen (2). Eine Bereitstellung (6) kann mehrere Bearbeitungsstationen (2) bedienen.

Die Bearbeitungsanlage (1) beinhaltet ferner eine Bauteilzuführeinrichtung (8), mit der die Bauteile (4,5) von der externen Bereitstellung (6) zu den einzelnen Bearbeitungsstationen (2) transportiert und dort übergeben werden. Die Bauteilzuführeinrichtung (8) weist ein oder mehrere bewegliche Verteilfahrzeuge (9) auf, die zwischen der oder den Bereitstellungen (6) und der oder den Bearbeitungsstationen (2) verkehren. Eine der verschiedenen Bewegungsmöglichkeiten ist in Figur 1 als beispielhafte Variante gestrichelt dargestellt.

In der Bearbeitungsanlage (1) und den Bearbeitungsstationen (2) werden Bauteile (4,5) beliebiger Art, Größe und Zahl bearbeitet und gehandhabt. Die Bauteile (4,5) werden in der Bearbeitungsstation (2) miteinander gefügt. Außerdem können die Bauteile (4,5) mit ein oder mehreren anderen Werkstücken (3) gefügt werden, die z.B. auf anderem Wege, insbesondere über eine Transferlinie oder einen Förderer, in die Bearbeitungsstation (2) gelangen. Die Bauteile (4,5) und Werkstücke (3) sind in der bevorzugten Ausführungsform Karosserieteile von Kraftfahrzeugen. Die Bauteile (4,5) können z.B. Teile einer Seitenwand sein. Die Bauteile (4,5) können andererseits Montageteile, z.B. Schrauben, oder andere Hilfsmittel sein. Daneben sind andere Varianten möglich.

Die Bearbeitungsstation(en) (2) können in beliebiger Weise ausgebildet sein und zur Durchführung beliebiger Bearbeitungs- oder Handhabungsprozesse dienen. In der einzelnen Bearbeitungsstation (2) können ein oder mehrere Bearbeitungs- und/oder Handhabungsgeräte (nicht dargestellt) angeordnet sein. Dies können z.B. mehrachsige Industrieroboter mit entsprechenden Werkzeugen sein. Mit diesen werden z.B. Handling- und Bearbeitungsaufgaben beim Fügen der Bauteile (4,5) durchgeführt. Die einzelne Bearbeitungsstation (2) kann eine Stationssteuerung (nicht dargestellt) aufweisen. Alternativ oder zusätzlich kann eine übergeordnete Anlagensteuerung vorhanden sein.

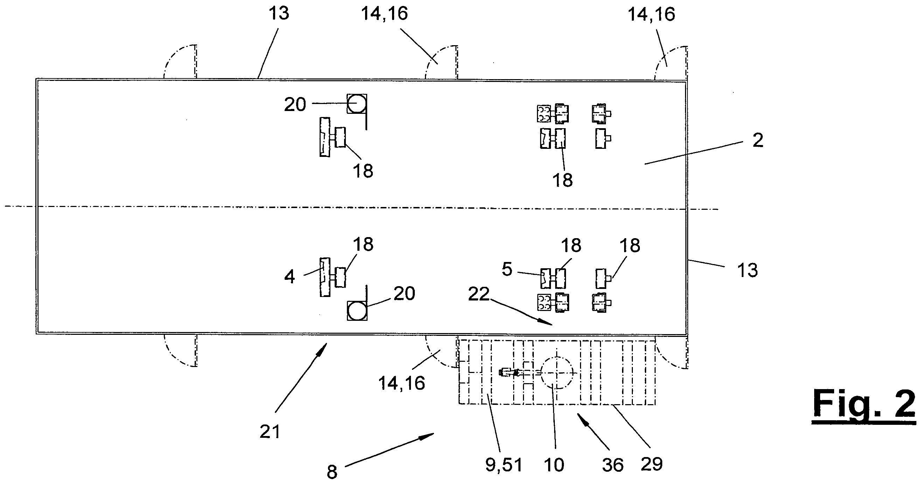

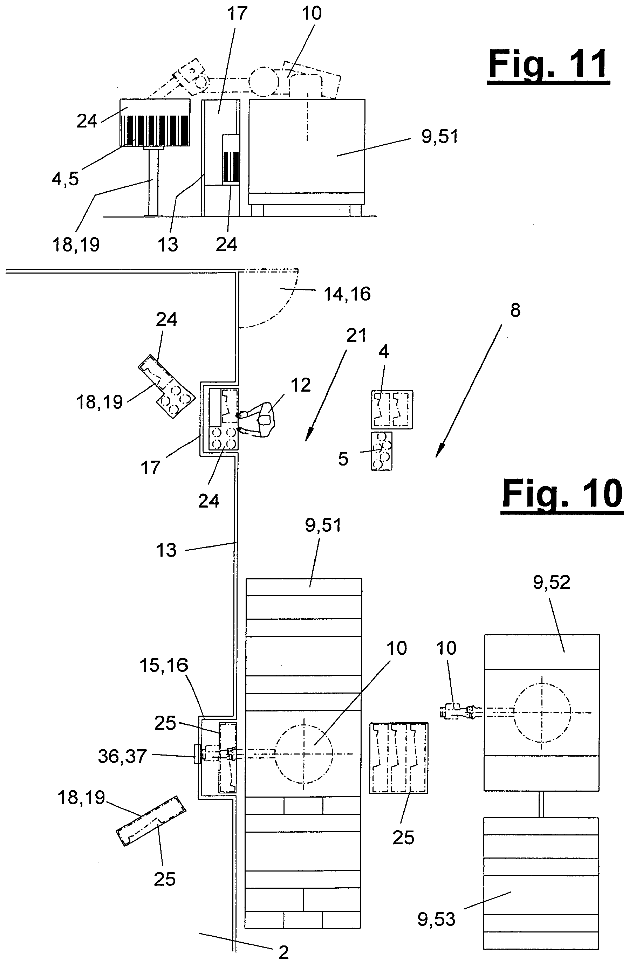

Die Bearbeitungsstation (2) ist außenseitig von einer umlaufenden Schutzabtrennung (13) umgeben, die einen unbefugten Personenzutritt verhindert. Die Schutzabtrennung (13) ist z.B. als mannshoher Zaun ausgebildet. Sie kann alternativ auch eine feste Wandung sein, z.B. bei einer Laserschweißkabine. Wie Figur 2 und 10 verdeutlichen, kann die Schutzabtrennung (13) ein oder mehrere Zugänge (14,15) mit einer Sicherungseinrichtung (16) aufweisen. Dies können z.B. Personenzugänge (14) in Form von Türen sein, die sich nur öffnen lassen, wenn ein gefahrloser Zutritt möglich ist. Die Sicherungseinrichtung (16) schaltet beispielsweise zu diesem Zweck die in der Bearbeitungsstation befindlichen Bearbeitungsgeräte (nicht dargestellt) aus. In Variation kann die Sicherungseinrichtung (16) beim Öffnen des Zugangs (14) einen Nothalt oder Notaus der Bearbeitungsgeräte veranlassen.

Die anderen Zugänge (15) können Maschinenzugänge sein, die sich von unbefugten Personen nicht öffnen lassen und die in der nachfolgend beschriebenen Weise vom Verteilgerät (10) geöffnet werden können. Ferner können fernsteuerbare Zugänge (nicht dargestellt) zum Einschleusen und Ausschleusen der Werkstücke (3) vorhanden sein. Die Bearbeitungsstationen (2) haben z.B. eine längliche Form und eine vorzugsweise zentrale Achse für den Bearbeitungs- und Fügefortschritt sowie ggf. für den Transport des oder der Werkstücke (3).

Außenseitig ist an den mit Bauteilen (4,5) zu beschickenden Bearbeitungsstationen (2) zumindest bereichsweise ein freier Verkehrsraum (21) für die Anfahrt, den Halt und die Abfahrt von mindestens einem Verteilfahrzeug (9) vorhanden. In der gezeigten Ausführungsform ist z.B. umlaufend außen an der Schutzabtrennung (13) ein von Anbauten, abgestellten Gegenständen oder dergl. freigehaltener Bereich für den ungehinderten Verteilfahrzeugverkehr vorhanden. Dies kann z.B. eine freie Fahrgasse sein.

An ein oder mehreren Außenseiten der Bearbeitungsstation (2) können ein oder mehrere Andockstellen (22) für ein oder mehrere Verteilfahrzeuge (9) vorhanden sein. An diesen Andockstellen (22) kann das Verteilfahrzeug (9) eine vorbestimmte exakte Position einnehmen, die für eine zielgenaue Durchführung der Handlingaufgaben günstig oder sogar erforderlich ist. An der Andockstelle (22) kann ferner eine Energiezuführung (23) für das Verteilfahrzeug (9) vorhanden sein. Die zugeführte Energie kann elektrischer Strom, ein fluidischer Treibstoff oder dergl. sein. Außerdem können an dieser Stelle Betriebsmittel, z.B. Kühlwasser, Druckluft, Hydraulikflüssigkeit oder dergl. übertragen werden. Auch eine Signalübertragung ist möglich. Ferner kann an der Andockstelle (22) eine stationäre Positionierhilfe für die Fahrzeugpositionierung vorhanden sein, die mit entsprechenden mechanischen Stütz- und Führungseinrichtungen ausgerüstet ist. Solche Andockstellen (22) können auch an anderen Orten in der Bearbeitungsanlage (1), z.B. an der Bereitstellung (6), angeordnet sein.

Die Bauteile (4,5) werden vorzugsweise auf geeigneten Bauteilträgern (24,25) kommissioniert und transportiert. Die Kommissionierung kann am Bauteilcenter (7) in der nachfolgend beschriebenen Weise geschehen. Alternativ oder zusätzlich können an der Bereitstellung (6) auch vorkommissionierte und mit Bauteilen (4,5) beladene Bauteilträger (24,25) angeliefert und bereit gestellt werden. Die Verteilfahrzeuge (9) fahren im Pendelverkehr zwischen den Bearbeitungsstationen (2) und der Bereitstellung, wobei sie beladene Bauteilträger (24,25) zuführen und leere Bauteilträger (24,25) zurückbringen. Alternativ können die Bauteile (4,5) auch ohne Bauteilträger (24,25) transportiert und zugeführt werden.

Die Bauteilträger (24,25) können in beliebiger geeigneter Weise ausgebildet sein. Es kann sich z.B. um Behälter mit Seitenwänden, um Paletten oder um beliebige andere Trageinrichtungen handeln, die ggf. geeignete Bauteilaufnahmen und Fixiereinrichtungen für die Bauteile (4,5) aufweisen. Die Bauteilträger (24) haben eine handhabungsgerechte Form und Größe sowie ein hebegünstiges Gewicht. Alternativ oder zusätzlich sind andere Bauteilträger (25) für Schwerlastzwecke möglich, die z.B. als Rollpaletten ausgebildet sein und am Boden oder in geeigneten Hängeführungen bewegt werden. Sie eignen sich für besonders schwere Bauteile (4,5) oder eine besonders große Ansammlung von Bauteilen (4,5).

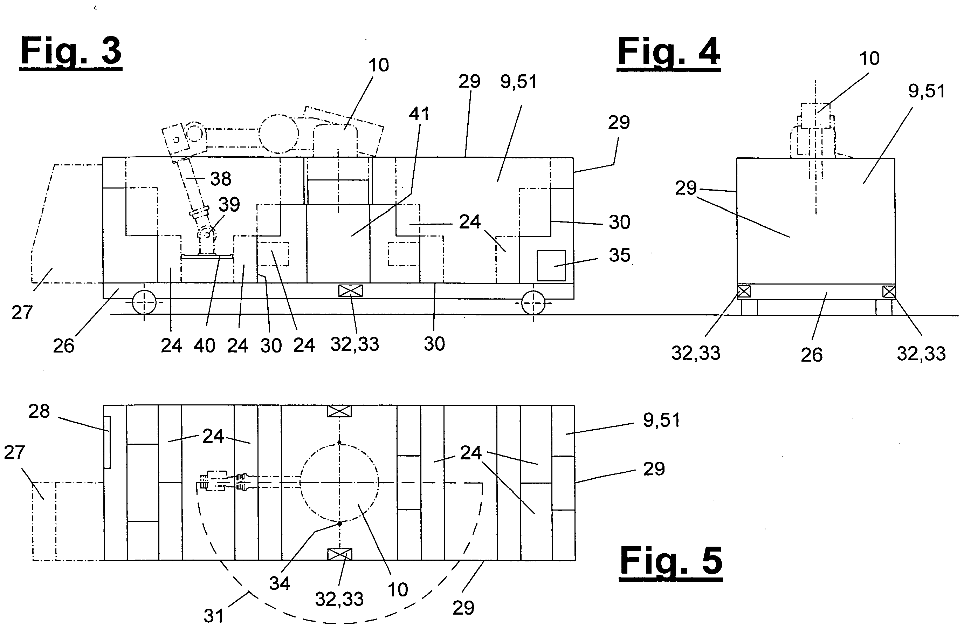

In Figur 3 bis 5 ist ein Verteilfahrzeug (9) im Detail dargestellt. Es weist ein Fahrgestell (26) auf, mit dem es über Räder auf dem Anlagenboden rollen oder sich entlang einer aufgeständerten Führung in der Art einer Hängebahn bewegen kann. Das Verteilfahrzeug (9) ist vorzugsweise selbstfahrend und besitzt einen entsprechenden Antrieb, z.B. einen Elektromotor mit Getriebe. Das Verteilfahrzeug (9) ist in beliebig geeigneter Weise lenkbar, z.B. durch eine Vorderachslenkung bzw. Vorderradlenkung, eine kombinierte Lenkung von Vorder- und Hinterrädern oder durch eine Knicklenkung eines entsprechend geteilten Fahrgestells (26).

Das Verteilfahrzeug (9) kann eine integrierte Energieversorgung haben, z.B. eine Batterie. Diese kann an einer Andockstelle (22) über die Energiezuführung (23) oder an anderer Stelle wieder aufgeladen werden, Alternativ ist eine permanente Energiezuführung über einen Kabelschlepp, eine induktive Übertragung oder dergl. möglich. In weiterer Variante sind beliebige andere Arten von Antrieben, Energiequellen oder -speichern bzw. Energiezuführungen möglich.

Das Verteilfahrzeug (9) kann einen Führerstand (27) für eine manuelle Bedienung aufweisen. Dieser kann alternativ für einen vollautomatischen Betrieb wegfallen. Außerdem besitzt das Verteilerfahrzeug (9) eine Sicherheitssensorik (28), die Kollisionen mit Personen oder Gegenständen rechtzeitig feststellt und verhindert. An geeigneter Stelle ist ferner eine Steuerung (35) vorhanden, welche die Fahrbewegungen und weitere Funktionen des Verteilsfahrzeugs (9) und seiner Teile steuert.

Auf dem Verteilfahrzeug (9) ist an geeigneter Stelle mindestens ein Manipulator (10) angeordnet, der die Handlingaufgaben mit den Bauteilen (4,5) und/oder den Bauteilträgern (24,25) durchführt. Der Manipulator (10) besitzt mehrere Achsen und kann fest oder lösbar angeordnet sein. Er ist vorzugsweise auf einem Sockel (41) erhöht angeordnet. Der Manipulator (10) ist z.B. als mehrachsiger Gelenkarmroboter ausgestaltet und hat beispielsweise sechs rotatorische Achsen. Der Manipulator (10) kann eine beliebige Anzahl und Art von rotatorischen und/oder translatorischen Achsen aufweisen. Er ist ebenfalls mit der Steuerung (35) verbunden. An seinem abtriebseitigen Roboterarm (38) ist ein geeignetes Abtriebselement, z.B. eine mehrachsige Roboterhand (39) angeordnet, die ein ggf. wechselbares Werkzeug (40) trägt. Das Werkzeug (40) ist beispielsweise ein ein- oder zweiarmiger Palettengreifer, mit dem ein oder mehrere Bauteilträger (24) gegriffen und mehrachsig bewegt werden können.

Das in Figur 3 bis 5 dargestellte Verteilfahrzeug (9) ist als Einzelwagen (51) ausgebildet, der außer dem Manipulator (10) ein oder mehrere Aufnahmen (30) für Bauteilträger (24,25) aufweist. Diese können z.B. beidseits des zentral angeordneten Manipulators (10) in zugangsgünstiger Weise, z.B. in einer Treppenform, positioniert sein. Die Aufnahmen (30) und die Bauteilträger (24,25) können ein Rastermaß haben, welches die Anordnung von in Art und/oder Größe unterschiedlichen Bauteilträgern (24,25) auf einer Aufnahme (30) zur Erhöhung der Transportflexibilität ermöglicht. Auch eine Schnellwechselmöglichkeit kann gegeben sein. Die Aufnahmen (30) können z.B. Gestelle mit Fixierelementen zum temporären Halten der Bauteilträger (24,25) sein. Ferner ist es möglich, dass ein oder mehrere Aufnahmen (30) als Einschübe, Schubladen oder dergl. zur umfassenden und versenkten Unterbringung im Fahrzeugaufbau ausgestaltet sind. Hier können z.B. Schubkästen für Kleinteile untergebracht sein. Die Aufnahmen (30) liegen im Arbeitsbereich (31) des Manipulators (10) und sind in ihrer Anordnung vorzugsweise auf eine maximale Transportkapazität optimiert.

Das Verteilfahrzeug (9) weist eine außenseitige und vorzugsweise umlaufende Schutzabschirmung (29) auf, die Personen den Zutritt zum Fahrzeuginnenraum und zu den Aufnahmen (30) sowie zum Manipulator (10) verwehrt. Die Schutzabschirmung (29) kann als Gitterzaun oder als massive Wandung ausgebildet sein und die ohnehin vorhandenen Stirn- und Heckwände des Verteilfahrzeugs (9) integrieren. Für Wartungszwecke können gesondert abgesicherte Zugänge (nicht dargestellt) vorhanden sein.

Am Fahrgestell (26) oder an anderer geeigneter Stelle ist mindestens eine ggf. seitlich ausfahrbare Andockeinrichtung (32) angeordnet, die mit der stationären Andockstelle (22) zusammenwirkt. In die Andockeinrichtung (32) kann eine Energiekupplung integriert sein, die an die Energiezuführung (23) selbstständig andockt. Über diese Energiezuführung kann z.B. der für die Handlingaufgaben des Manipulators (10) an der Haltestelle bzw. Andockstelle (22) erforderliche höhere Energiebedarf gedeckt werden. Die fahrzeugseitig mitgeführte Energieversorgung kann dadurch begrenzt und auf den Fahrbetrieb ausgelegt sein. Über die Energieankupplung können auch in der vorerwähnten Weise Steuersignale ausgetauscht werden. Ferner kann das Verteilfahrzeug (9) eine geeignete Kippsicherung (nicht dargestellt) aufweisen, die für die Stabilität bei den Manipulatorbewegungen und Hebevorgängen sorgt. Die z.B. mit Stützstempeln oder -streben ausgestattete Kippsicherung wird in der Parkstellung oder Andockstellung aktiviert bzw. ausgefahren und kann mit der Andockstelle (22) und einer dortigen Stützeinrichtung zusammenwirken.

Die Andockeinrichtung (32) kann ferner eine Positionssensorik (33) aufweisen. Die Andockeinrichtung (32) besitzt hierfür z.B. ein schwimmend gelagertes Dockingelement, welches formschlüssig mit einem stationären Gegenelement an der Andockstelle (22) in Eingriff tritt. Das Bewegungsspiel ist mindestens so groß wie die Positionierungenauigkeit des Verteilfahrzeugs (9) und gleicht diese Toleranzen aus. Das vorzugsweise bewegbar angetriebene Andockelement wird mit einer Suchfunktion und einer Selbstzentrierung am Gegenelement positioniert und in formschlüssigen Eingriff gebracht. Der hierbei zwischen einer Ausgangsstellung und der tatsächlichen Dockingstellung zurückgelegte Weg wird mit der Positionssensorik (33) gemessen und als Korrekturwert für die Manipulatorposition in die Steuerung (35) eingegeben. Die Raumposition des Verteilfahrzeugs (9) wird über die bekannte Raumposition der Andockstelle (22) erfasst und an die Steuerung (35) mitgeteilt. Hieraus kann die exakte Raumposition des Manipulators (10) bestimmt werden. Alternativ kann die Positionssensorik (33) auch der Andockstelle (22) zugeordnet und die Kinematik entsprechend umgekehrt werden.

Wie Figur 5 verdeutlicht, kann der Arbeitsbereich (31) des Manipulators (10) eingeschränkt werden. Dies kann z.B. über eine mechanische oder eine steuerungstechnische Verriegelung (34) geschehen, die mit der Steuerung (35) oder ggf. mit der Andockeinrichtung (32) in Verbindung steht. Die beispielsweise an beiden Breitseiten des Verteilfahrzeugs (9) angeordnete Andockeinrichtung (32) signalisiert im Andockfall die zur Bearbeitungsstation (2) gerichtete Arbeitsseite und auf den Innenraum des Verteilfahrzeugs (9) beschränkt. Eine Bewegung des Manipulators (10) über die gegenüberliegende freie Fahrzeugseite und die dortige Schutzabschirmung (29) hinaus wird über die Verriegelung (34) verhindert. Von dieser Seite her können somit Werker (12) oder andere Personen nicht in den Arbeitsbereich (31) des Manipulators (10) gelangen. Bei einem Andocken des Verteilfahrzeugs (9) an der anderen Fahrzeugseite wird die Verriegelung und Funktion entsprechend umgedreht.

Figur 10 zeigt eine Variante der in Figur 3 bis 5 dargestellten Ausführungsform des einteiligen Verteilfahrzeugs (9). In Figur 10 ist in der rechten Bilddarstellung ein Verteilfahrzeug (9) gezeigt, welches mehrteilig als Wagenzug ausgebildet ist und aus einem Manipulatorwagen (52) und ein oder mehreren angekuppelten Transportwagen (53) besteht. Auf dem Manipulatorwagen (52) befindet sich der Manipulator (10), wobei nur wenige oder keine Aufnahmen (30) für Bauteilträger (24,25) vorhanden sind. Diese Aufnahmen (30) sind auf dem oder den Transportwagen (53) angeordnet, die sich im Arbeitsbereich des entsprechend ausgebildeten Manipulators (10) befinden. Der Transportwagen (53) kann bei Bedarf abgekuppelt werden, so dass der Manipulatorwagen (52) isoliert beweglich ist.

Das Verteilfahrzeug (9) und/oder der Manipulator (10) besitzen eine Einrichtung (36) zum Überwinden der Schutzabtrennung (13) der Bearbeitungsstation (2). Diese Einrichtung (36) ist im einen Fall der Manipulator (10), der in seiner Beweglichkeit und Reichweite so ausgebildet und angeordnet ist, dass er über die Schutzabtrennung (13) hinweg in die Bearbeitungsstation (2) greifen kann. Hierfür ist es günstig, wenn der Manipulator (10) auf dem Sockel (41) erhöht angeordnet ist. Bei entsprechender Manipulatorausbildung kann der Sockel (41) aber auch entfallen. Der Manipulator (10) kann mit seinem Werkzeug (40) ein oder mehrere Bauteilträger (24) an der Aufnahme (30) fassen, über die Schutzabtrennung (13) heben und innerhalb der Bearbeitungsstation (2) an geeigneter Stelle und mit einer vorgegebenen Position absetzen. Umgekehrt können vollständig oder teilweise geleerte Bauteilbehälter (24) aus der Bearbeitungsstation (2) entnommen und auf den Aufnahmen (30) abgestellt werden. Innerhalb der Bearbeitungsstation (2) sind an vorbestimmten Stellen ein oder mehrere Halter (18) für Bauteilträger (24,25) vorgesehen. Nachdem durch das maschinelle Handling auf Ergonomieerfordernisse keine Rücksicht genommen werden muss, können die Bauteilträger (24) in einer für die Handhabungssysteme in der Bearbeitungsstation (2) günstigen Positionen, z.B. erhöht auf Ständern (19), abstellt werden. Durch die kurzen Handlingzeiten des Logistik-Manipulators (10) ist ein Wechsel der Bauteilträger (24) innerhalb der Prozesszeit in der Bearbeitungsstation (2) möglich, so dass stationsinterne Vorratsstellen für Bauteilträger (24) entfallen oder wesentlich reduziert werden können.

In konstruktiver Hinsicht können die Halter (18) in beliebig geeigneter Weise ausgebildet sein. Sie sind vorzugsweise an die Form der Bauteilträger (24,25) angepasst und besitzen geeignete Führungs- und Fixiereinrichtungen. Im einfachsten Fall handelt es sich um Stützplatten mit Positionierpins. Alternativ können ein oder mehrere Halter (18) auch als Schüttgutbehälter (20) ausgestaltet sein, in welche Kleinteile, z.B. Schrauben, Bügel oder dergl., mit ihrem Bauteilträger (24)eingesetzt werden. Alternativ kann der mit den Kleinteilen befüllte Bauteilträger (24) in den Schüttgutbehälter (20) vom Manipulator (10) entleert werden. Am Schüttgutbehälter (20), z.B. einem Rütteltopf, kann eine Vereinzelung und Zuführung für die weitere Verarbeitung und Bereitstellung der Einzelteile vorhanden sein.

Figur 10 zeigt eine Variante mit schwergewichtigen Bauteilträgern (25) und einem Maschinenzugang (15) in der Schutzabtrennung (13). Der Bauteilträger (25) kann vom Verteilfahrzeug (9) in geeigneter Weise mitgeführt werden oder anderweitig in der Nähe des Maschinenzugangs (15) bereit gestellt werden. Der Bauteilträger (25) rollt dabei auf eigenen Rollen oder anderen Stützmitteln. Ein Bauteilträger (25), dessen Gewicht oder Größe die Traglast oder Handlingfähigkeit des Manipulators (10) übersteigt, kann z.B. über eine schiefe Ebene vom Manipulator auf eine entsprechende Aufnahme am Verteilfahrzeug (9) gezogen, arretiert und umgekehrt zum Entladen wieder abgeschoben werden. Die Aufnahme kann in einer Nische der Schutzabschirmung (29) angeordnet sein oder einen verschließbaren Zugang in der Schutzabschirmung (29) haben. In weiterer Abwandlung kann der schwergewichtige Bauteilträger (25) am Verteilfahrzeug (9) angehängt werden und beim Transport auf den eigenen Rädern rollen.

Der Manipulator (10) schiebt an der Bearbeitungsstation (2) den Bauteilträger (25) in den vorzugsweise in einer Nische der Schutzabtrennung (13) befindlichen Maschinenzugang (15). Das unmittelbar vor dem Maschinenzugang (15) positionierte Verteilfahrzeug (9) schirmt dabei den Zutritt gegenüber Personen ab.

Die Einrichtung (36) zum Überwinden der Schutzabtrennung (13) besteht in diesem Fall in einer Öffnungseinrichtung (37), die vom Manipulator (10) oder vom Verteilfahrzeug (9) mitgeführt und betätigt wird. Sie enthält eine Art Schlüssel, mit dem der Maschinenzugang (15) geöffnet und seine Sicherungseinrichtung (16) abgeschaltet werden kann. Der Manipulator (10) schiebt in der vorerwähnten Weise den Bauteilträger (25) an seinen vorgesehenen Platz in der Bearbeitungsstation (2) und ggf. an einen bodenseitigen Halter (18) und entnimmt ggf. im Austausch einen leeren Bauteilträger (25). Diese Austauschvorgänge können allerdings auch getrennt und zu unterschiedlichen Zeiten bzw. Gelegenheiten ablaufen. Nach Beendigung des Zuführ- und Handlingvorgangs wird der Maschinenzugang (15) mit der Öffnungseinrichtung (37) wieder verschlossen.

Figur 10 verdeutlicht eine weitere Variante mit der Bereitstellung und Zuführung von Bauteilen (4,5). Hierbei ist z.B. in der Schutzabtrennung (13) eine Nische (17) angeordnet, die ein oder mehrere Bauteilträger (24) aufnimmt. Auf diesen Bauteilträgern (24) kommissioniert ein Werker (12) ein oder mehrere und ggf. verschiedene Bauteile (4,5), die er von einem außerhalb des Verkehrsraums (21) gelegenen Bauteilmagazin (42) entnimmt. Nach Fertigstellung entfernt sich der Werker (12), wobei anschließend der Manipulator (10) eines heranbewegten Verteilfahrzeugs (9) den oder die Bauteilträger (24) aufnimmt, in geeigneter Weise über oder durch die Schutzabtrennung (13) in die Bearbeitungsstation (2) bewegt. Bei dieser Variante können sich die Bauteilträger (24) in einer ergonomisch günstigen Position für die manuelle Bestückung und Kommissionierung befinden und vom Manipulator (10) anschließend in eine andere, handlinggerechte Position in der Bearbeitungsstation (2) gebracht werden.

Der Manipulator (10) kennt z.B. aus einem Teaching-Vorgang oder durch Offline-Programmierung die Position der einzelnen Halter (18) in der Bearbeitungsstation (2) und kann diese direkt anfahren und bedienen. Die entsprechenden Daten sind in der Steuerung (35) hinterlegt.

Die Anforderungssignale für die Zuführung von Bauteilen (4,5) und Bauteilträgern (24,25) erhält jedes Verteilfahrzeug (9) von ein oder mehreren Logistik-Steuerungen (11) in der Bearbeitungsanlage (1). Diese können mit der oder den Anlagensteuerungen verbunden oder in diese integriert sein. Innerhalb der Bearbeitungsstation findet eine bedarfsgerechte Füllstandsüberwachung der Bauteilträger (24,25) statt, so dass rechtzeitig vor deren Entleeren ein Anforderungssignal an die Logistiksteuerung (11) abgegeben wird, welche für eine entsprechende rechtzeitige Verfügbarkeit des oder der benötigten Bauteile (4,5) an der Bereitstellung (6) und für die Abholung und die Zuführung dieser Bauteile (4,5) mit ein oder mehreren Verteilfahrzeugen (9) sorgt. Die Logistiksteuerung (11) steuert hierbei auch die Fahrbewegungen der Verteilfahrzeuge (9) und ggf. den gesamten Fahrzeugverkehr. Die Übermittlung der Steuersignale kann in beliebig geeigneter Weise über Leitungsverbindungen oder drahtlos per Funk, Infrarot oder dergl. erfolgen.

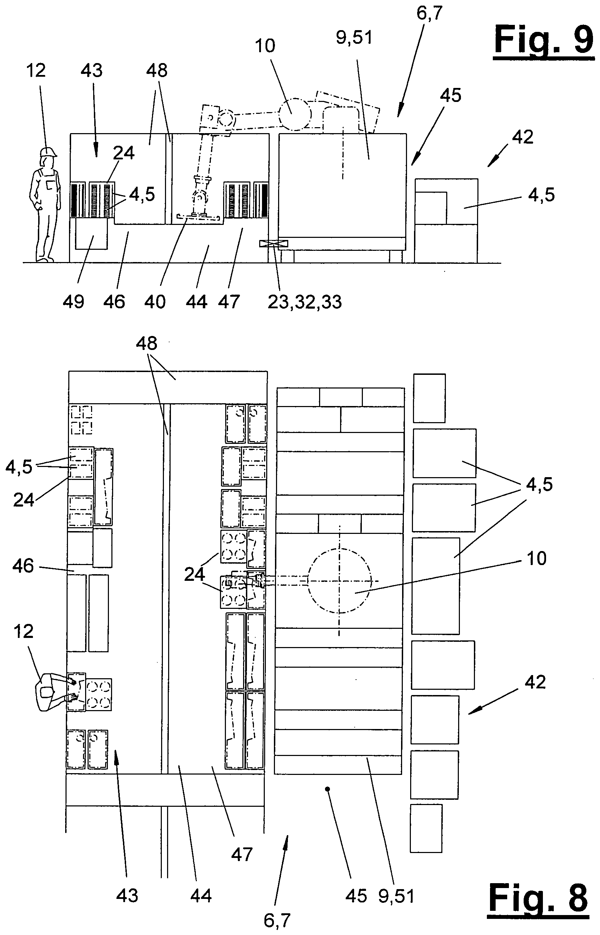

Figur 8 und 9 verdeutlichen in einer abgebrochenen Darstellung ein Bauteilcenter (7), welches in Figur 1 in einem größeren Umriss dargestellt ist. Das Bauteilcenter (7) besitzt ein oder mehrere Kommissionierbereiche (43) mit Bauteilmagazinen (42) zur manuellen oder automatischen Kommissionierung und Beladung von Bauteilträgern (24,25) mit Bauteilen (4,5). Am einzelnen Kommissionierbereich (43) befindet sich ein Bereitstellungstisch (44) mit ein oder mehreren zugeordneten Bauteilmagazinen (42), die durch eine Gasse (45) vom Bereitstellungstisch (44) getrennt sind. Die Gassenabmessungen sind in Länge und Breite vorzugsweise auf die Abmessungen eines Verteilfahrzeugs (9) abgestimmt. Die Gasse (45) ist für Werker (12) begehbar und für ein oder mehrere Verteilfahrzeuge (9) befahrbar. Am Bereitstellungstisch (44) werden ein oder mehrere bereit gestellte Bauteilträger (24,25) mit Bauteilen (4,5) aus den Bauteilmagazinen (42) in der gewünschten Art, Anzahl und Anordnung beladen und kommissioniert. Die Bauteilträger (24,25) können ggf. an vorbestimmten Stellen positioniert sein. An dieser Stelle können die Bauteilträger (24,25) anschließend von ein oder mehreren Verteilfahrzeugen (9) abgeholt und zu den Bearbeitungsstationen (2) gebracht werden.

Der Bearbeitungstisch (44) kann mehrere, z.B. zwei Tischseiten (46,47) aufweisen, die durch eine Schutzabtrennung (48) voneinander abgeteilt sind. Hierdurch können an den Tischseiten (46,47) gleichzeitig manuelle Kommissioniervorgänge und maschinelle Be- und Entladevorgänge durch einen Logistik-Manipulator (10) stattfinden. Die Schutzabtrennung (48) verläuft z.B. in der Längsmittelachse des Bereitstellungstisches (44) und an den Querseiten der Tischbereiche (46,47). Jede Tischseite (46,47) hat ihre zugeordnete Gasse (45) und ihr Bauteilmagazin (42).

Der Bearbeitungstisch (44) kann an den Ladebereichen ein oder mehrere manuell oder automatisch betätigbare und ggf. motorisch angetriebene Hubeinrichtungen (49) zum lokalen oder tischübergreifenden Anheben oder Absenken der Arbeitsfläche und der Bauteilträger (24,25) aufweisen. Diese ermöglichen z.B. eine ergonomisch günstige niedrige Beladehöhe und die Bildung von Bauteilstapeln in den Bauteilträgern (24,25) oder von Bauteilträgerstapeln. Für den Logistik-Manipulator (10) ist eine höhere Position der Bauteilträger (24,25) für die Be- und Entladevorgänge kinematisch günstiger.

Im Kommissionierbereich (43) können ferner ein oder mehrere im wesentlichen horizontal arbeitende Verschiebeeinrichtungen (nicht dargestellt) angeordnet sein, mit denen z.B. die Arbeitsfläche auf dem Bearbeitungstisch (44) und/oder die Bauteilmagazine (42) in Längs- oder Querrichtung seitlich verschieben lassen. Hierdurch kann z.B. die Gassenbreite verkleinert werden, um die Ergonomie zu verbessern und die Wege für den Werker (12) beim Kommissionieren und beim Beladen der Bauteilträger (24,25) zu verkürzen. Außerdem können im Bauteilcenter (7) ein oder mehrere Ladehilfen (nicht dargestellt) vorhanden sein, die z.B. kranartig ausgebildet sind und den Werker (12) bei den Lade- und Transportvorgängen der Bauteile (4,5) unterstützen und entlasten.

Die Personensicherheit innerhalb des Bauteilcenters (7) ist durch die Schutzabtrennungen (48) gewährleistet. Die Sicherheitssensorik (28) oder eine andere geeignete Einrichtung sorgt dafür, dass ein Verteilfahrzeug (9) nur dann in eine Gasse (45) einfahren kann, wenn sich dort kein Werker (12) befindet. Durch die Breitenanpassung von Verteilfahrzeug (9) und Gasse (45) wird andererseits ein Zutritt für Werker (12) in diesen besetzten Gassenbereich verhindert.

Die Bereitstellung (6) und insbesondere in der Ausgestaltung als Bauteilcenter (7) besitzt eine Steuerung (50), die mit der Logistik-Steuerung (11) in geeigneter Weise kommuniziert. Hierüber erhält der Werker (12) rechtzeitig eine Information über Art und Anzahl der von ein oder mehreren Bearbeitungsstationen (2) angeforderten Bauteile (4,5). Ggf. kann ihm auch optisch, akustisch oder auf andere Weise signalisiert werden, wie und wo er diese Bauteile (4,5) am Bearbeitungstisch (44) in den Bauteilträgern (24,25) bereitzustellen hat. Diese Bereitstellungspositionen sind ebenfalls vorzugsweise vorgegeben und dem Manipulator (10) für ein sicheres Ergreifen bekannt. Außerdem können die Bauteilmagazine (42) eine Einrichtung zur Füllstandsüberwachung haben, die ebenfalls mit der Steuerung (50) verbunden ist. Hierüber kann eine Neige signalisiert und ein rechtzeitiger Nachschub von den in größeren Gebinden angelieferten Bauteilen (4,5) veranlasst werden. Diese Nachbestellung kann vollautomatisch über die Steuerung (50) oder unter manuellem Eingriff von Werkern (12) ausgeführt werden.

In einer vollautomatischen Variante ist es ferner möglich, das der Manipulator (10) des Verteilfahrzeugs (9) selbst die Kommissionierung und Beladung organisiert und durchführt. Hierzu kann er mit einem ggf. gewechselten geeigneten Werkzeug (40) die einzelnen Bauteile (4,5) aus dem Bauteilmagazin (42) greifen und seine auf den Aufnahmen (30) mitgeführten Bauteilträger (24,25) beladen. Auch die Entladung der leeren Bauteilträger (24,25) nimmt der Manipulator (10) im Bauteilcenter (7) oder an einer anderen Bereitstellung (6) automatisch vor.

An der Bereitstellung (6) oder dem Bauteilcenter (7) können ähnlich wie bei den Bearbeitungsstationen (2) ein oder mehrere stationäre Andockstellen (22) mit den vorbeschriebenen Ausgestaltungen und Funktionen einschließlich Energiezuführung und Positionsbestimmung angeordnet sein. Ferner kann die Steuerung (50) des Bauteilcenters (7) auch mit den Steuerungen (35) der Verteilfahrzeuge (9) kommunizieren. Die Steuerungen (35) der Verteilfahrzeuge (9) können ihrerseits auch mit den Stations- und Anlagensteuerungen in Verbindung treten.

Die Steuerung und Lenkung des oder der Verteilfahrzeuge (9) kann in beliebig geeigneter Weise geschehen. Es kann eine Funksteuerung, eine bodenseitige induktive Fahrzeugführung oder dergl. sein. Die Steuerung der Manipulatoren (10) erfolgt z.B. über eine programmierbare Bahnsteuerung, in der die Positionen der Aufnahmen (30) und der Bauteilträger (24,25) auf dem Verteilfahrzeug (9) sowie auf dem Bereitstellungstisch (44) sowie die Positionen der Halter (18) in den Bearbeitungsstationen (2) absolut oder relativ zu ebenfalls positionsmäßig bekannten Andockstelle (22) gespeichert sind. Solche Andockstellen (22) können auch in der Bereitstellung (6), insbesondere dem Bauteilcenter (7), vorhanden sein.

Der Manipulator (10) kann mit einer Wechselvorrichtung für den Austausch seiner Werkzeuge (40) ausgerüstet sein. Dies ermöglicht ihm die Durchführung anderer Aufgaben. Dies können einerseits die vorerwähnten Werkzeuge für das Fügen und Bearbeiten von Bauteilen (4,5) während ihres Transports auf dem Verteilfahrzeug (9) sein. Andererseits können diese Werkzeuge für eine Beteiligung an den stationsinternen Prozessen sein. Der Manipulator (10) kann ferner für Wartungs-, Inspektions- oder Reinigungsarbeiten innerhalb der Bearbeitungsstationen (2) eingesetzt werden. Hierfür können die Werkzeug als Sprühpistole, Fettpresse, Industriestaubsauger oder dergl. ausgebildet sein. Durch die Dank der erfindungsgemäßen Bauteillogistik verringerbaren Stationsbreite kann der Manipulator (10) relativ weit bis in die Bearbeitungsstation (2) reichen und dort automatisch z.B. Ketten reinigen und schmieren oder mit einem Kamera- oder Visionssystem Kabelschlepps und kritische Maschinenelemente auf Beschädigungen überprüfen. Eine weitere Einsatzmöglichkeit ist die automatische Entleerung von Spänebehältern an Kappenfräsern.

Im beschriebenen Ausführungsbeispiel wird das Logistiksystem für die Zuführung von Bauteilen (4,5) zu Bearbeitungsstationen (2) eingesetzt. Die Verwendung kann auch umgekehrt sein, wobei in Verbindung mit Demontagelinien Bauteile abgeführt werden.

Der Manipulator (10) kann in der vorbeschriebenen Weise mit einem Kamera- oder Visionssystem zur Erfassung und Auswertung von Bildern ausgerüstet sein. Dies lässt sich auch für Logistikzwecke einsetzen, z.B. für eine vom Manipulator (10) vorzunehmende Füllstandskontrolle der Bauteilmagazine (42) oder der in den Bearbeitungsstationen (2) befindlichen Bauteilträger (24,25). Zudem kann der Manipulator (10) über dieses Kamerasystem geführt und positioniert werden.

Die Merkmale der vorbeschriebenen Ausführungsbeispiele können in beliebiger Weise untereinander ausgetauscht und kombiniert werden. Ferner sind Abwandlungen der beschriebenen konstruktiven und funktionellen Ausgestaltungen in verschiedener Weise möglich. Dies betrifft z.B. die Steuerungsanordnung, die Zuordnung von Stationen (2) und Bereitstellungen (6), die Anzahl, Ausbildung und Bewegung der Verteilfahrzeuge (9). Hierbei ist es insbesondere möglich, unterschiedliche Arten und Größen von Verteilfahrzeugen (9) innerhalb einer Bearbeitungsanlage (1) zu haben. Ferner kann eine Kommissionierung von Bauteilen (4,5) und eine Beladung von Bauteilträgern (24,25) in der Bearbeitungsanlage (1) ganz oder teilweise entfallen. Bauteile (4,5) können z.B. herstellerseitig vorkommissioniert und bereits in Bauteilträgern (24,25) oder in einer anderen für die beschriebene Logistik geeigneten Gebindeform angeliefert und an der Bereitstellung (6) verfügbar gemacht werden.

### BEZUGSZEICHENLISTE

- 1: Bearbeitungsanlage
- 2: Bearbeitungsstation
- 3: Werkstück, Karosserieteil
- 4: Bauteil
- 5: Bauteil
- 6: Bereitstellung für Bauteile
- 7: Bauteilcenter
- 8: Bauteilzuführeinrichtung
- 9: Verteilfahrzeug
- 10: Manipulator
- 11: Steuerung, Logistiksteuerung
- 12: Werker
- 13: Schutzabtrennung, Zaun
- 14: Zugang, Personenzugang
- 15: Zugang, Maschinenzugang
- 16: Sicherungseinrichtung
- 17: Nische
- 18: Halter für Bauteilträger
- 19: Ständer
- 20: Schüttgutbehälter
- 21: Verkehrsraum
- 22: Andockstelle
- 23: Energiezuführung
- 24: Bauteilträger, Behälter, Palette
- 25: Bauteilträger, Rollpalette
- 26: Fahrgestell
- 27: Führerstand
- 28: Sicherheitssensorik
- 29: Schutzabschirmung
- 30: Aufnahme für Bauteilträger
- 31: Arbeitsbereich
- 32: Andockeinrichtung, Energiekupplung
- 33: Positionssensorik
- 34: Verriegelung Arbeitsbereich
- 35: Steuerung
- 36: Einrichtung zum Überwinden der Schutzabtrennung
- 37: Öffnungseinrichtung
- 38: Roboterarm
- 39: Roboterhand
- 40: Werkzeug, Palettengreifer
- 41: Sockel
- 42: Bauteilmagazin
- 43: Kommissionierbereich
- 44: Bereitstellungstisch
- 45: Gasse
- 46: Tischseite
- 47: Tischseite
- 48: Schutzabtrennung
- 49: Hubeinrichtung
- 50: Steuerung
- 51: Einzelwagen
- 52: Manipulatorwagen
- 53: Transportwagen

## Patentansprüche

1. Bearbeitungsanlage mit mindestens einer Bearbeitungsstation (2) mit einer umgebenden Schutzabtrennung (13) zum Personenschutz, mindestens einer Bereitstellung (6) und einer Zuführeinrichtung (8) für Bauteile (4,5), nämlich Karosserieteile von Kraftfahrzeugen, **dadurch gekennzeichnet, dass** die Zuführeinrichtung (8) ein oder mehrere zwischen der Bereitstellung (6) und der Bearbeitungsstation (2) bewegliche Verteilfahrzeuge (9) mit mindestens einem mehrachsigen Manipulator (10) und mit ein oder mehreren Aufnahmen (30) für Bauteilträger (24,25) aufweist, wobei das Verteilfahrzeug (9) und/oder der Manipulator (10) eine Einrichtung (36) zum Überwinden der Schutzabtrennung (13) der Bearbeitungsstation (2) besitzen,
wobei der Manipulator (10) die Einrichtung (36) bildet und in seiner Beweglichkeit und Reichweite so ausgebildet und angeordnet ist, dass er über die Schutzabtrennung (13) hinweg in die Bearbeitungsstation (2) greifen kann
und/oder die Einrichtung (36) in einer vom Verteilfahrzeug (9) und/oder dem Manipulator (10) mitgeführten und betätigten Öffnungseinrichtung (37) besteht, um einen Maschinenzugang (15) in der Schutzabtrennung (13) zu öffnen und zu schließen.

2. Bearbeitungsanlage nach Anspruch 1, **dadurch gekennzeichnet, dass** außen an der Schutzabtrennung (13) der Bearbeitungsstation (2) ein oder mehrere freie Verkehrsräume (21) und mindestens eine Andockstelle (23) für das Verteilfahrzeug (9) angeordnet sind.

3. Bearbeitungsanlage nach Anspruch 1 oder 2, **dadurch gekennzeichnet, dass** in der Bearbeitungsstation (2) innerhalb der Schutzabtrennung (13) ein oder mehrere Halter (18) für Bauteilträger (24,25) im Arbeitsbereich (31) des Manipulators (10), vorzugsweise im Bereich an einer Andockstelle (23), angeordnet sind.

4. Bearbeitungsanlage nach Anspruch 1, 2 oder 3, **dadurch gekennzeichnet, dass** der Manipulator (10) erhöht auf einem Sockel (41) angeordnet und als Gelenkarmroboter ausgebildet ist, der ein Werkzeug (39) zum Handhaben von Bauteilträgern (24,25) aufweist.

5. Bearbeitungsanlage nach einem der vorhergehenden Ansprüche, **dadurch gekennzeichnet, dass** der Bauteilträger (24) als Behälter oder als Palette, insbesondere als Rollpalette ausgebildet ist und mehrere gleichartige Bauteile (4,5) in einer vorkommissionierten Anordnung für einen automatischen Zugriff aufnimmt.

6. Bearbeitungsanlage nach einem der vorhergehenden Ansprüche, **dadurch gekennzeichnet, dass** der Manipulator (10) einen auf eigenen Rollen rollenden Bauteilträger (25) in den vorzugsweise in einer Nische der Schutzabtrennung (13) befindlichen Maschinenzugang (15) schiebt, wobei das unmittelbar vor dem Maschinenzugang (15) positionierte Verteilfahrzeug (9) dabei den Zutritt gegenüber Personen abschirmt.

7. Bearbeitungsanlage nach einem der vorhergehenden Ansprüche, **dadurch gekennzeichnet, dass** das Verteilfahrzeug (9) manuell oder ferngesteuert lenkbar ist und als Einzelwagen (51) für einen kombinierten Manipulator- und Bauteiltransport oder als Wagenzug mit mindestens einem Manipulatorwagen (52) und ein oder mehreren ankuppelbaren Transportwagen (53) für Bauteile (4,5) ausgebildet ist.

8. Bearbeitungsanlage nach einem der vorhergehenden Ansprüche, **dadurch gekennzeichnet, dass** das Verteilfahrzeug (9) ein Fahrgestell (26) mit einer außenseitigen umgebenden Schutzabschirmung (29) aufweist.

9. Bearbeitungsanlage nach einem der Ansprüche 2 bis 8, **dadurch gekennzeichnet, dass** das Verteilfahrzeug (9) eine Andockeinrichtung (32) aufweist, die mit der Andockstelle (22) zusammenwirkt.

10. Bearbeitungsanlage nach Anspruch 9, **dadurch gekennzeichnet, dass** die begrenzt bewegliche Andockeinrichtung (32) eine Positionssensorik (33) aufweist.

11. Bearbeitungsanlage nach einem der Ansprüche 2 bis 10, **dadurch gekennzeichnet, dass** das Verteilfahrzeug (9) eine Steuerung (35) für den Manipulator (10) mit einer andockabhängigen Verriegelungen (34) für dessen Arbeitsbereich (31) aufweist.

12. Bearbeitungsanlage nach einem der vorhergehenden Ansprüche, **dadurch gekennzeichnet, dass** die Bereitstellung (6) als Bauteilcenter (7) ausgebildet ist und ein oder mehrere Kommissionierbereiche (43) mit Bauteilmagazinen (42) zur manuellen oder automatischen Kommissionierung und Beladung von Bauteilträger (24,25) mit Bauteilen (4,5) aufweist.

13. Bearbeitungsanlage nach Anspruch 12, **dadurch gekennzeichnet, dass** am Kommissionierbereich (43) ein Bereitstellungstisch (44) mit mindestens einem durch eine Gasse (45) beabstandeten Bauteilmagazin (42) angeordnet ist, wobei der Bereitstellungstisch (44) mehrere durch eine Schutzabtrennung (48) abgeteilte Tischseiten (46,47) mit zugeordneter Gasse (45) und Bauteilmagazin (42) aufweist.

14. Bearbeitungsanlage nach Anspruch 13, **dadurch gekennzeichnet, dass** die Gasse (45) in ihrer Breite und Länge an die Fahrzeugabmessungen angepasst und bei eingefahrenem Verteilfahrzeug (9) geschlossen ist.

15. Bearbeitungsanlage nach Anspruch 13 oder 14, **dadurch gekennzeichnet, dass** der Bereitstellungstisch (44) eine Hubeinrichtung (49) aufweist.

16. Bearbeitungsanlage nach einem der vorhergehenden Ansprüche, **dadurch gekennzeichnet, dass** die Bearbeitungsanlage (1) mindestens eine Steuerung (11,35,50) für die Logistik der Bauteile (4,5) und der Verteilfahrzeuge (9) aufweist, wobei die Steuerungen (11,35,50) durch eine Datenfernübertragung verbunden sind.

## Claims

1. Processing installation having at least one processing station (2) with a surrounding protective partition (13) for protecting personnel, at least one supply means (6) and a feed device (8) for components (4, 5), namely bodywork parts of motor vehicles, **characterized in that** the feed device (8) has one or more distribution vehicles (9), which can be moved between the supply means (6) and the processing station (2) and have at least one multi-axis manipulator (10) and one or more mounts (30) for component carriers (24, 25), wherein the distribution vehicle (9) and/or the manipulator (10) have/has a device (36) for negotiating the protective partition (13) of the processing station (2),
wherein the manipulator (10) forms the device (36) and, in respect of its movement capability and range, is designed, and arranged, such that it can reach over the protective partition (13) into the processing station (2), and/or the device (36) consists in an opening device (37) which is carried along, and activated, by the distribution vehicle (9) and/or the manipulator (10), in order to open and to close a machine access area (15) in the protective partition (13).

2. Processing installation according to Claim 1, **characterized in that** one or more free travel spaces (21) and at least one docking location (23) for the distribution vehicle (9) are arranged on the outside of the protective partition (13) of the processing station (2).

3. Processing installation according to Claim 1 or 2, **characterized in that**, in the processing station (2) within the protective partition (13), one or more holders (18) for component carriers (24, 25) are arranged in the operating region (31) of the manipulator (10), preferably in the region near a docking location (23).

4. Processing installation according to Claim 1, 2 or 3, **characterized in that** the manipulator (10) is arranged in an elevated position on a base (41) and is designed in the form of a jointed-arm robot which has a tool (39) for handling component carriers (24, 25).

5. Processing installation according to one of the preceding claims, **characterized in that** the component carrier (24) is designed in the form of a container or of a pallet, in particular of a rolling pallet, and accommodates a plurality of components (4, 5) of the same kind in a pre-picked arrangement for automatic pickup.

6. Processing installation according to one of the preceding claims, **characterized in that** a component carrier (25) which rolls on dedicated rollers is pushed by the manipulator (10) into the machine access area (15), which is located preferably in a niche of the protective partition (13), wherein the distribution vehicle (9), which is positioned directly in front of the machine access area (15), prevents anyone from gaining access here.

7. Processing installation according to one of the preceding claims, **characterized in that** the distribution vehicle (9) can be steered manually or by remote control and is designed in the form of a single wagon (51) for combined manipulator and component transportation or in the form of a train of wagons having at least one manipulator wagon (52) and one or more couple-on transport wagons (53) for components (4, 5).

8. Processing installation according to one of the preceding claims, **characterized in that** the distribution vehicle (9) has a chassis (26) with a surrounding protective screen (29) on the outside.

9. Processing installation according to one of Claims 2 to 8, **characterized in that** the distribution vehicle (9) has a docking device (32) which interacts with the docking location (22).

10. Processing installation according to Claim 9, **characterized in that** the docking device (32), which can be moved to a limited extent, has a position-sensor system (33).

11. Processing installation according to one of Claims 2 to 10, **characterized in that** the distribution vehicle (9) has a control means (35) for the manipulator (10) with docking-dependent locking means (34) for the operating region (31) of said manipulator.

12. Processing installation according to one of the preceding claims, **characterized in that** the supply means (6) is designed in the form of a central component unit (7) and has one or more order-picking regions (43) with component magazines (42) for manual or automatic picking and loading of component carriers (24, 25) with components (4, 5).

13. Processing installation according to Claim 12, **characterized in that** a supply table (44) with at least one component magazine (42) spaced apart by an aisle (45) is arranged at the order-picking region (43), wherein the supply table (44) has a plurality of table sides (46, 47) with an associated aisle (45) and component magazine (42), said table sides being divided off by a protective partition (48).

14. Processing installation according to Claim 13, **characterized in that** the aisle (45) is adapted, in width and length, to the vehicle dimensions and, when the distribution vehicle (9) has been moved into it, is closed.

15. Processing installation according to Claim 13 or 14, **characterized in that** the supply table (44) has a lifting device (49).

16. Processing installation according to one of the preceding claims, **characterized in that** the processing installation (1) has at least one control means (11, 35, 50) for the logistics of the components (4, 5) and of the distribution vehicles (9), wherein the control means (11, 35, 50) are connected by a remote data-transmission means.

## Revendications

1. Installation d'usinage avec au moins une station d'usinage (2) avec une séparation de protection périphérique (13) pour la protection des personnes, au moins un approvisionnement (6) et un dispositif de chargement (8) pour des pièces (4, 5), à savoir des pièces de carrosserie de véhicules automobiles, **caractérisée en ce que** le dispositif de chargement (8) présente un ou plusieurs véhicule(s) de distribution (9) mobile(s) entre l'approvisionnement (6) et la station d'usinage (2) avec au moins un manipulateur multiaxe (10) et avec un ou plusieurs logement (s) (30) pour des porte-pièces (24, 25), dans laquelle le véhicule de distribution (9) et/ou le manipulateur (10) comportent un dispositif (36) pour surmonter la séparation de protection (13) de la station d'usinage (2), dans laquelle le manipulateur (10) forme le dispositif (36) et est configuré et disposé, au niveau de sa mobilité et de sa portée, de telle manière qu'il puisse intervenir dans la station d'usinage (2) pardessus la séparation de protection (13) et/ou le dispositif (36) consiste en un dispositif d'ouverture (37) emporté et actionné par le véhicule de distribution (9) et/ou le manipulateur (10), afin d'ouvrir et de fermer un accès à la machine (15) dans la séparation de protection (13).

2. Installation d'usinage selon la revendication 1, **caractérisée en ce qu'**un ou plusieurs espace(s) de trafic libres (21) et au moins un point d'accrochage (23) pour le véhicule de distribution (9) sont disposés à l'extérieur de la séparation de protection (13) de la station d'usinage (2).

3. Installation d'usinage selon la revendication 1 ou 2, **caractérisée en ce qu'**un ou plusieurs supports(s) (18) pour des porte-pièces (24, 25) est/sont disposé(s) dans la zone de travail (31) du manipulateur (10), de préférence dans la région d'un point d'accrochage (23), dans la station d'usinage (2) à l'intérieur de la séparation de protection (13).

4. Installation d'usinage selon la revendication 1, 2 ou 3, **caractérisée en ce que** le manipulateur (10) est disposé en surélévation sur un socle (41) et est constitué par un robot à bras articulé, qui présente un outil (39) permettant de manipuler des porte-pièces (24, 25).

5. Installation d'usinage selon l'une quelconque des revendications précédentes, **caractérisée en ce que** le porte-pièces (24) est réalisé sous la forme d'un récipient ou d'une palette, en particulier d'une palette roulante, et contient plusieurs pièces identiques (4, 5) dans un ordre prédéfini en vue d'une prise automatique.

6. Installation d'usinage selon l'une quelconque des revendications précédentes, **caractérisée en ce que** le manipulateur (10) glisse un porte-pièces (25) roulant sur ses propres roulettes dans un accès à la machine (15) se trouvant de préférence dans une niche de la séparation de protection (13), dans laquelle le véhicule de distribution (9) positionné directement devant l'accès à la machine (15) empêche ainsi l'accès pour des personnes.

7. Installation d'usinage selon l'une quelconque des revendications précédentes, **caractérisée en ce que** le véhicule de distribution (9) peut être piloté manuellement ou à distance et il forme un chariot unique (51) pour un transport combiné du manipulateur et de la pièce ou un train de chariots avec au moins un chariot de manipulateur (52) et un ou plusieurs chariot(s) de transport pouvant être attelés (53) pour des pièces (4, 5).

8. Installation d'usinage selon l'une quelconque des revendications précédentes, **caractérisée en ce que** le véhicule de distribution (9) présente un châssis (26) avec un écran de protection (29) l'entourant extérieurement.

9. Installation d'usinage selon l'une quelconque des revendications 2 à 8, **caractérisée en ce que** le véhicule de distribution (9) présente un dispositif d'accrochage (32), qui coopère avec le point d'accrochage (22).

10. Installation d'usinage selon la revendication 9, **caractérisée en ce que** le dispositif d'accrochage (32) à mobilité limitée présente des détecteurs de position (33).

11. Installation d'usinage selon l'une quelconque des revendications 2 à 10, **caractérisée en ce que** le véhicule de distribution (9) présente une commande (35) pour le manipulateur (10) avec des verrouillages (34) dépendant de l'accrochage pour sa zone de travail (31).

12. Installation d'usinage selon l'une quelconque des revendications précédentes, **caractérisée en ce que** l'approvisionnement (6) est constitué par un centre des pièces (7) et présente une ou plusieurs zone(s) de préparation (43) avec des magasins de pièces (42) pour la préparation manuelle ou automatique et le chargement de porte-pièces (24, 25) avec des pièces (4, 5).

13. Installation d'usinage selon la revendication 12, **caractérisée en ce qu'**une table de préparation (44) avec au moins un magasin de pièces (42) espacé par une allée (45) est disposée dans la zone de préparation (43), dans laquelle la table de préparation (44) présente plusieurs côtés de table (46, 47) séparés par une séparation de protection (48) avec une allée associée (45) et un magasin de pièces (42).

14. Installation d'usinage selon la revendication 13, **caractérisée en ce que** l'allée (45) est adaptée en largeur et en longueur aux dimensions du véhicule et est fermée lorsqu'un véhicule de distribution (9) est engagé.

15. Installation d'usinage selon la revendication 13 ou 14, **caractérisée en ce que** la table de préparation (44) présente un dispositif de levage (49).

16. Installation d'usinage selon l'une quelconque des revendications précédentes, **caractérisée en ce que** l'installation d'usinage (1) présente au moins une commande (11, 35, 50) pour la logistique des pièces (4, 5) et des véhicules de distribution (9), dans laquelle les commandes (11, 35, 50) sont reliées par une télétransmission de données.
